# EUROPEAN PATENT APPLICATION

(11) **EP 3 968 190 A1**
(43) Date of publication of application: **16.03.2022**
(21) Application number: 19927925.8
(22) Date of filing: 11.11.2019
(51) Int. Cl.: G06F 21/31, G06F 21/45, G06T 19/00, G06T 13/40, H04L 9/08, H04L 29/08

(54) **IDENTITY AUTHENTICATION MANAGEMENT SYSTEM IN VIRTUAL REALITY WORLD**

(30) Priority: 07.05.2019 KR 20190053183; 21.05.2019 KR 20190059675
(71) Applicant: Ok, Jae Yun, Gyeonggi-do 16822 (KR)
(72) Inventor: Ok, Jae Yun, Gyeonggi-do 16822 (KR)
(74) Representative: Frenkel, Matthias Alexander
(86) International application number: PCT/KR2019/015288
(87) International publication number: WO 2020/226247

(57) **Abstract**

The present invention relates to an identity authentication management system in a virtual reality world, the system comprising: a virtual identity registration application unit for receiving at least one piece of protection target information among personal identity information and object information and photo image information of a protection target, and applying for registration of identity information of the protection target, which is to be used in a virtual reality world; a virtual identity character generation unit for configuring a similarity range for the photo image information, and generating at least one virtual character according to the configured similarity range; and a virtual identity authentication registration unit for performing identity authentication based on the personal identity information, performing a similarity check between the virtual character and another virtual character included in a pre-registered virtual identification card, and when the identity authentication and the similarity check are normally processed, assigning each of a public key and a private key for disclosure and protection of the personal identity information by using a blockchain, registering the virtual identity information with the virtual character in a database, and issuing a virtual identification card.

## Description

### Technical Field

Embodiments of the present invention relate to an identity authentication management system in a virtual reality world.

### Background Art

Recently, the world of virtual reality (VR) is attracting worldwide attention as the 4th industrial revolution.

However, in realizing a virtual reality world, registering or managing the portrait rights (or copyrights) for individuals who will virtually live in the virtual reality world has an ambiguous legal status for portrait rights unlike in the real world.

In the end, everyone who is to live in the virtual reality world creates a new three-dimensional virtual character, which is to replace them, as designed according to their individual taste and propensity.

In this case, unlike ordinary people, celebrities, such as pop artists or politicians, will have no choice but to create a 3D virtual character resembling them and register a design.

If a person steals a celebrity's image to create a virtual character and is active in in the virtual reality world, the celebrity will end up losing his portrait rights.

In the virtual reality world, due to the nature of the design of the virtual character, a person's face may be reproduced in various ways, such as a live-action model with almost the same shape as his face or a casual type of simple design, and may be appropriated by someone else.

However, this is difficult to legally address due to many ambiguous legal issues in current international law.

Further, numerous people may create their own unique virtual characters and pre-register images, and conduct modeling on the virtual characteristics. However, in reality, since the number of designers working in the field of 3D character production is absolutely small, it may take a long time to create a real 3D character and register a design. Accordingly, if one's character is created and registered for a design copyright first by someone else, the person would be stopped from using the character resembling himself.

### Detailed Description of the Invention

### Technical Problems

According to an embodiment of the present invention, there is provided an identity authentication management system in a virtual reality world that may filter and track, through a search engine, a similarity range specifying an option for similarity with a person's current image through reserved subscription and, if another person registers a new character after the reference date of registration, and it corresponds to the similarity range designated by the person, block a third party's secondary subscription that may cause copyright infringement for the virtual character.

There is also provided an identity authentication management system in a virtual reality world that allows all users of the virtual reality world to act anonymously.

### Means to Address the Problems

According to an embodiment of the present invention, an identity authentication management system in a virtual reality world comprises a virtual identity registration application unit receiving at least one protection target information of personal identity information and object information and photo image information for a protection target and applying for registration of identity information for the protection target to be used in the virtual reality world, a virtual identity character generation unit setting a similarity range for the photo image information and generating at least one virtual character according to the set similarity range, and a virtual identity authentication registration unit performing identity authentication based on the personal identity information and a similarity check between the virtual character and another virtual character included in a pre-registered virtual ID, if the identity authentication and the similarity check are normally processed, providing a public key and a private key for disclosing and protecting the personal identity information using a blockchain, registering the virtual identity information, along with the virtual character, in a database, and issuing a virtual ID.

The identity authentication management system may further comprise a virtual identity reservation registration unit that, when applying for registration of the virtual identity information through the virtual identity registration application unit without the virtual character, preempts a date of the issuance of the virtual ID on a date of application of the registration, when generating the virtual character and performing the similarity check later, interworks with the virtual identity authentication registration unit to select a virtual character registered before the date of application of the registration, as a target for similarity comparison and perform the similarity check.

The virtual identity character generation unit may include a similarity range setting unit setting a similarity range for the photo image information, a 3D character modeling unit 3D-modeling the photo image information according to the similarity range set through the similarity range setting unit to generate draft data of the virtual character, and a 3D character editing unit performing 3D design editing on the draft data to generate the virtual character.

The virtual identity authentication registration unit may include an identity authentication performing unit performing identity authentication based on the personal identity information, a virtual character similarity check performing unit performing the similarity check between the virtual character and the other virtual character included in the pre-registered virtual ID, an encryption code generation unit, if the identity authentication and the similarity check are normally processed, providing an encryption code including a public key for mutually identifying information disclosed in the virtual reality world among the personal identity information and a private key for protecting information not disclosed in the virtual reality world among the personal identity information, a virtual identity information registration unit registering the virtual identity information including the personal identity information, the virtual character, and the encryption code in the database, and a virtual ID issuing unit issuing the virtual ID to a person whose virtual identity information has been registered.

The identity authentication management system may further comprise a personal identity information display identification unit displaying the virtual ID, along with the virtual character, in the virtual reality world, receiving the public key displayed on the virtual ID, displaying only disclosed information among the personal identity information included in the virtual ID to be identified through another virtual character, receiving the private key, and displaying non-disclosed information among the personal identity information.

The identity authentication management system may further comprise a virtual anonymous identity creation unit generating a virtual anonymous character having a similarity range value not more than a preset similarity range value through the virtual identity character generation unit according to a request of a member and, if the identity authentication based on the personal identity information is normally processed, providing a public key for mutually identifying only some of the information disclosed in the virtual reality world together with the virtual anonymous character or registering virtual anonymous identity information with the database to issue a virtual anonymous ID without providing the public key,

The identity authentication management system may further comprise a first virtual character change unit changing to and displaying a virtual character having a preset similarity range according to a preset category for an activity of the virtual character and a place where the virtual character is located.

The identity authentication management system may further comprise a second virtual character change unit predicting an aging value of the virtual character over time in the virtual reality world and applying the predicted aging value to the virtual character to change and display the virtual character.

### Effects of the Invention

According to the present invention, there may be provided an identity authentication management system in a virtual reality world that may filter and track, through a search engine, a similarity range specifying an option for similarity with a person's current image through reserved subscription and, if another person registers a new character after the reference date of registration, and it corresponds to the similarity range designated by the person, block a third party's secondary subscription that may cause copyright infringement for the virtual character.

There may also be provided an identity authentication management system in a virtual reality world that allows all users of the virtual reality world to act anonymously.

### Brief Description of the Drawings

FIG. 1 is a view schematically illustrating an identity authentication management system in a virtual reality world according to an embodiment of the present invention.
FIG. 2 is a block diagram illustrating an overall configuration of an identity authentication management system in a virtual reality world according to an embodiment of the present invention.
FIG. 3 is a block diagram illustrating a specific configuration of a virtual identity character generation unit according to an embodiment of the present invention.
FIG. 4 is a block diagram illustrating a specific configuration of a virtual identity authentication registration unit according to an embodiment of the present invention.
FIG. 5 is a view illustrating an example of a virtual character according to an embodiment of the present invention.
FIG. 6 is a view illustrating an example of a VR sensor suit for using a virtual reality world according to an embodiment of the present invention.

### Best Mode to Practice the Invention

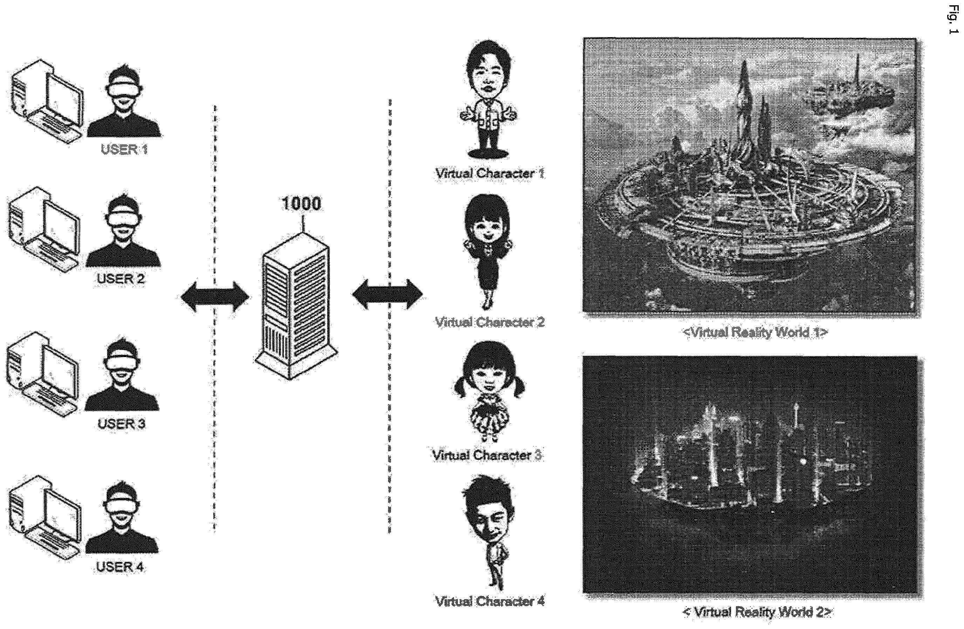

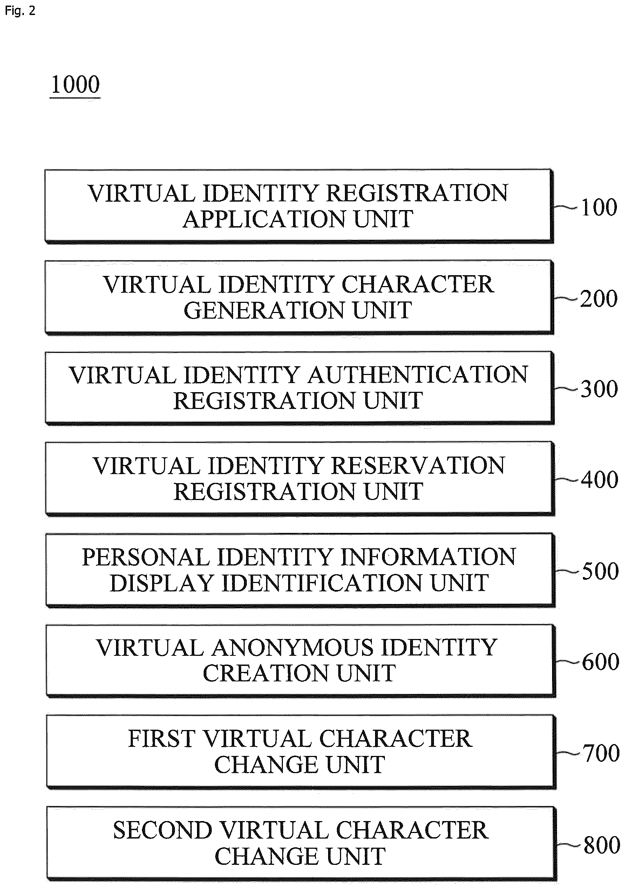

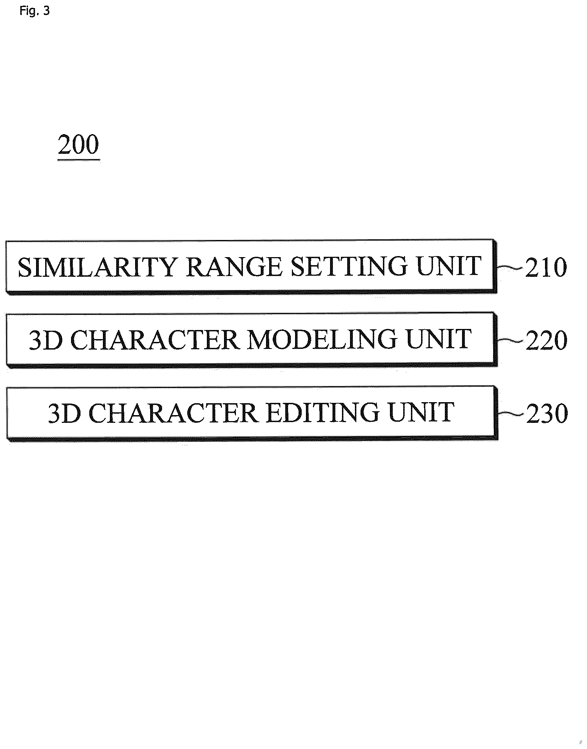

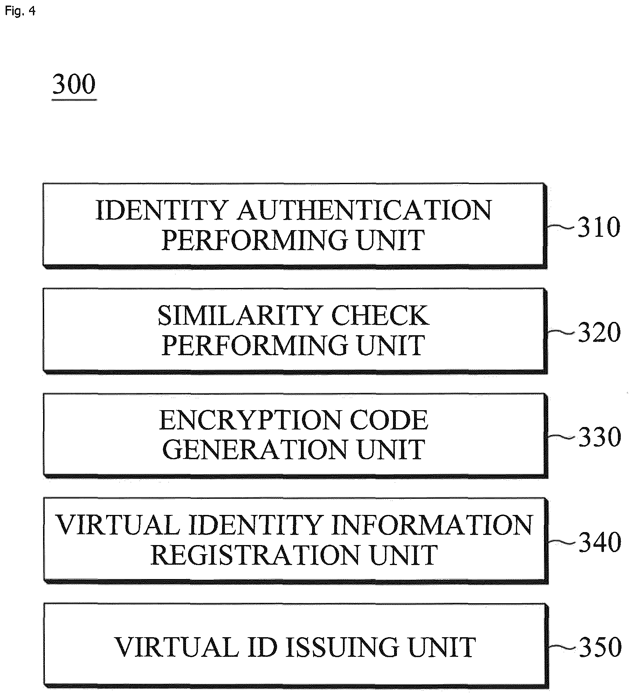

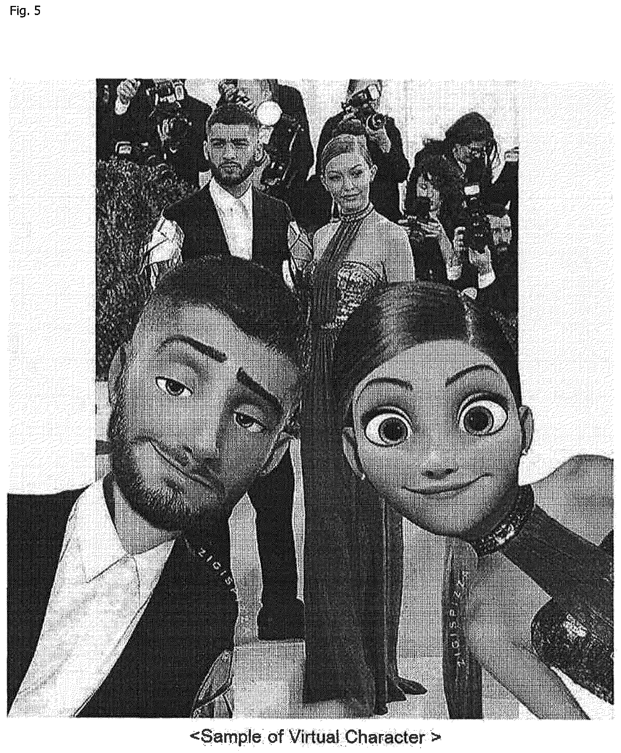

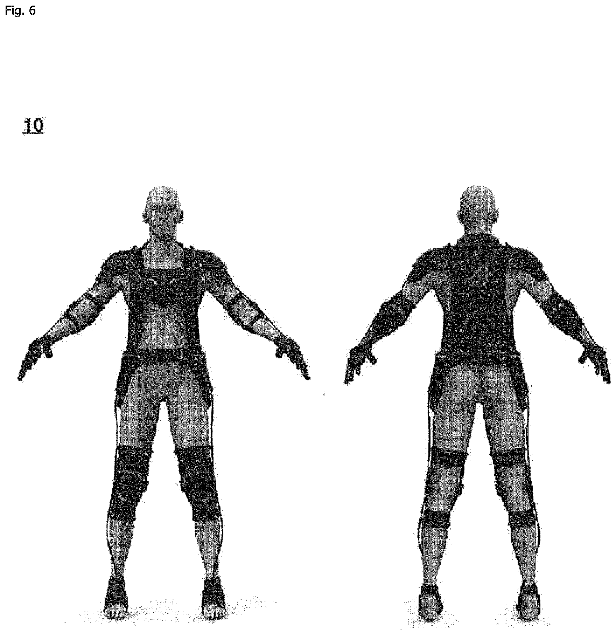

FIG. 1 is a view schematically illustrating an identity authentication management system in a virtual reality world according to an embodiment of the present invention. FIG. 2 is a block diagram illustrating an overall configuration of an identity authentication management system in a virtual reality world according to an embodiment of the present invention. FIG. 3 is a block diagram illustrating a specific configuration of a virtual identity character generation unit according to an embodiment of the present invention. FIG. 4 is a block diagram illustrating a specific configuration of a virtual identity authentication registration unit according to an embodiment of the present invention. FIG. 5 is a view illustrating an example of a virtual character according to an embodiment of the present invention. FIG. 6 is a view illustrating an example of a VR sensor suit for using a virtual reality world according to an embodiment of the present invention.

Referring to FIGS. 1 to 4, an identity authentication management system 1000 in a virtual reality world (hereinafter referred to as a 'virtual identity authentication management system') according to an embodiment of the present invention may include at least one of a virtual identity registration application unit 100, a virtual identity character generation unit 200, a virtual identity authentication registration unit 300, a virtual identity reservation registration unit 400, a personal identity information display identification unit 500, a virtual anonymous identity creation unit 600, a first virtual character change unit 700, and a second virtual character change unit 800.

The virtual identity registration application unit 100 may receive personal identity information, object information, and the applicant's photo image information from a member who wants to receive a virtual identity ID for the virtual reality world or an object (thing, product, or building) to be protected for design in the virtual reality world and apply for registration of the virtual identity information to be used in the virtual reality world. Of course, it is preferable that the user performs a membership subscription procedure for the virtual reality world identity registration before using the virtual identity registration application unit 100 and, in the process, some information to be registered in the virtual identity registration application unit 100 may be automatically entered. Meanwhile, in the instant embodiment, not only photo image information, which is 2D data, but 3D modeling information, which is obtained by 3D scanning the target through a 3D scanner may be registered.

As described above, the protection target for which the virtual identity is to be registered may be a human or an object, such as a thing, product, or building. In this case, the object information may include detailed information for the corresponding object, such as a use, an operation method, and a history of the object. Hereinafter, for convenience of description, the description focuses primarily on a configuration for registering a personal identity for a person. It is preferable that a registration procedure for object information is similar to a registration procedure for personal identity information or has a process capable of registration using personal identity information.

The personal identity information may include personal information, such as the member's name, date of birth, gender, age, country, nickname (or member ID), contact information, email address, occupation (or job), work address, residence address, and the like, and it may be provided separately as required items and optional items.

The photo image information may include actual photo images of the member's front, side, back, and whole body, but without being limited thereto, may include data, such as a three-dimensional scan images.

When a virtual character for the member is not created when applying for virtual identity registration, the virtual identity reservation registration unit 300 may reserve identity pre-registration based on the personal identity information and photo image information provided from the member through the virtual identity registration application unit 100, which is described below in detail.

The virtual identity character generation unit 200 may set a similarity range for photo image information and may create at least one virtual character according to the set similarity range. To this end, the virtual identity character generation unit 200 may include at least one of a similarity range setting unit 210, a 3D character modeling unit 220, and a 3D character editing unit 230.

The similarity range setting unit 210 may set various similarity ranges for the photo image information registered through the virtual identity registration application unit 100. For example, the entire similarity range may be set to 0 to 99%. The closer to 99%, the closer to the real appearance of the member a virtual character may be created. As coming closer to 0%, a character may be created in the form of a caricature or parody, rather than the actual appearance of the member. In the similarity range of 0%, a character that is completely different from the member's actual appearance, e.g., in the form of a specific animal, beast, or object resembling the member, may be created. Further, detailed information regarding the feature of the character to be created depending on each similarity range may be further included so as to create a more detailed and satisfactory character. The similarity range may serve to select the protection range of the virtual character.

Meanwhile, the similarity range in the present embodiment may be provided to be selected in %, or may be set by directly receiving numerical information for a specific similarity.

The 3D character modeling unit 220 may generate draft data of a virtual character by 3D modeling the photo image information registered by the member according to the similarity range set through the similarity range setting unit 210. In this case, the 3D modeling may be partially auto-completed through a 3D modeling program based on the photo image information, thus making it possible to reduce the work time and speed up the work of the designer performing the 3D modeling.

The 3D character editing unit 230 may complete a virtual character by performing 3D design editing on the draft data generated through the 3D character modeling unit 220. In this case, an editing tool (program) for the 3D draft data may be provided to reflect a specific shape, e.g., a caricature or a form merged with the feature of a specific animal, requested by the member based on the contour or design of the 3D virtual character included in the draft data.

Through this process, one virtual character having a predetermined similarity to the real person may be generated as illustrated in FIG. 5.

The virtual identity authentication registration unit 300 may perform identity authentication based on the personal identity information and a similarity check between the virtual character and another virtual character included in the pre-registered virtual ID and, if the identity authentication and the similarity check are normally processed, provide a public key and a private key for publication and protection of the personal identity information using a blockchain, register the member's virtual identity information, along with the generated virtual character, with a database, and then issue a virtual ID to the member. To this end, the virtual identity authentication registration unit 300 may include at least one of an identity authentication performing unit 310, a similarity check performing unit 320, an encryption code generation unit 330, a virtual identity information registration unit 340, and a virtual ID issuing unit 350.

The identity authentication performing unit 310 may perform identity authentication based on personal identity information (name, contact information, e-mail address, date of birth, residence address, etc.) registered through the virtual identity registration application unit 100. Various identity authentication methods may be adopted, such as mobile phone authentication, e-mail authentication, i-PIN authentication, and public certificate authentication.

The similarity identify performing unit 320 may perform a similarity check between the virtual character generated through the virtual identity character generation unit 200 and another virtual character included in a virtual ID pre-registered in the database. Such a similarity check may be performed for the similarity range. For example, when the similarity range of the generated virtual character is close to the real appearance of 80 to 99%, the similarity check may be performed on the virtual character registered in the similarity range of 80 to 99%, and if the similarity between the characters is a preset value or more as a result of comparison between the respective feature points of the characters, registration of the character to be newly registered may be rejected. In this case, a notification message or a notification pop-up window may be output to adjust the similarity range of the character to be newly registered.

Meanwhile, the similarity determination of the virtual character may be carried out by means of, e.g., a program, as described above, but without being limited thereto, may be performed by a person with a certain authority with the naked eye to approve or reject the registration.

If the identity authentication and the similarity check are normally processed, the encryption code generation unit 330 may provide an encryption code including a public key for mutual identification of the information disclosed in the virtual reality world among the member's personal identity information and a private key for protection of information not disclosed in the virtual reality world among the personal identity information, using blockchain technology.

The public key is public information that allows each virtual character to be identified by anyone in the virtual reality world. Public information for the member of the character, e.g., nickname, name, age, occupation, or other basic personal information, may be identified using the public key. As an identification method, if the public key displayed along with the character through a user interface provided by a virtual reality (VR) device and a VR sensor suit 10 worn as shown in FIG. 6 is entered to a DB key search window, the personal information public for the member may be immediately identified based on the entered public key, or the public personal information may be immediately displayed by selecting the corresponding public key. It is also possible to identify the public personal information through a DB image search for the character.

The private key is security information that is known only to the member and may play a role to protect personal information, which the member does not want to be open to other members, from the other members. Further, the private key allows non-public security personal information to be identified when entered through the DB key search window.

The virtual identity information registration unit 340 may register virtual identity information, including the personal identity information, virtual character, and encryption code (e.g., private key and public key) of the member for which identity authentication and character similarity check have been normally completed, with the database, and the database may safely protect the stored information through a blockchain encryption solution.

The virtual ID issuing unit 350 may issue a virtual ID to a person whose virtual identity information has been registered, i.e., a virtual identity registrant. The virtual ID may include, e.g., disclosed personal information and character information from which the member's identity may be identified and may also be issued as a real physical ID. When issued as a real physical ID, it may be issued in the form of an RF card so that various information stored in the real physical ID may be recognized through, e.g., an RF reader. The virtual ID may serve as a citizenship granted to the member in the virtual reality world.

When registration of the virtual identity information is applied for through the virtual identity registration application unit 100, the virtual identity reservation registration unit 400 may preempt the issue date of the virtual ID on the registration application date and interwork with the virtual identity authentication registration unit 300 to select the virtual character registered after the registration application date, as the target for similarity comparison and perform a similarity check, when creating or generating the virtual character and performing a similarity check on the virtual character later.

For example, in a case where a registration application for virtual identity information has been completed on January 1, 2019, but registration of a virtual character fails (a virtual character to be registered is not yet prepared), and a virtual character is registered on February 1, 2019, although the virtual character is registered on February 1, 2019 after the registration application date (January 1, 2019), the registration date of the virtual character may be dated back to the registration application date (January 1, 2019), and the virtual character registered before the registration application date (January 1, 2019) may be selected as the target for similarity comparison and a similarity check may be performed. In other words, even when there is a gap of about 31 days between the virtual identity information registration application date (January 1, 2019) and the virtual character registration date (February 1, 2019), the virtual character registered upon applying for registration of the virtual identity information registered therebetween may be excluded from similarity comparison. This is so done considering the physical limit on the number of designers who produce virtual characters. It is preferable to make a reservation in advance as in this embodiment so that the priority date may be preempted as the registration application date for virtual identity information.

The personal identity information display identification unit 500 may display the virtual ID together with the corresponding virtual character in the virtual reality world. The personal identity information display identification unit 500 may receive the public key displayed on the virtual ID, display only public information among the personal identity information included in the virtual ID to be identified through another virtual character, and receive the private key to display the non-public information among the personal identity information.

The public key is public information that allows each virtual character to be identified by anyone in the virtual reality world. Public information for the member of the character, e.g., nickname, name, age, occupation, or other basic personal information, may be identified using the public key. As an identification method, if the public key displayed along with the character through a user interface provided by a virtual reality (VR) device and a VR sensor suit 10 worn as shown in FIG. 6 is entered to a DB key search window, the personal information public for the member may be immediately identified based on the entered public key, or the public personal information may be immediately displayed by selecting the corresponding public key. It is also possible to identify the public personal information through a DB image search for the character.

The private key is security information that is known only to the member and may play a role to protect personal information, which the member does not want to be open to other members, from the other members. Further, the private key allows non-public security personal information to be identified when entered through the DB key search window.

The virtual anonymous identity creation unit 600 may generate a virtual anonymous character having a similarity range value not more than a preset similarity range value through the virtual identity character generation unit 200 according to a request of a member (applicant or registrant) (or when necessary) and, if identity authentication based on personal identity information is normally processed, provide a public key for mutually identifying only some of the information disclosed in the virtual reality world together with the virtual anonymous character or register the virtual anonymous identity information with the database and issue a virtual anonymous ID without providing the public key.

For example, a member may apply a virtual character which has a different face and different physical characteristics from him and may make a setting to disclose only some personal information, further limited than normally disclosed personal information by the public key, or not to disclose all the personal information. The virtual anonymous character may be used to intentionally hide the member's information from the other members or to disclose only some information and may be created by registration of a basic virtual character and personal identity information, with the virtual ID issued. The virtual anonymous ID may be assigned a separate encryption code or may be changed.

Meanwhile, as described above, a member may choose whether to act anonymously or under their real name in the virtual reality world and may switch to a desired one among various identities he registered even while active in the virtual reality world.

The first virtual character changing unit 700 may change to and display a virtual character having a preset similarity range according to a preset category with respect to the activity of the virtual character and the place where the virtual character is positioned in the virtual reality world.

For example, if a specific member previously sets activities in the category of family gatherings, such as birthday parties, 60th/70th/80th birthday parties, or family trips, and specific places where he may be located for family events, such as wedding or funerals, an activity or place of the category may be recognized, and an automatic change (mutual change is also possible) may be made to the virtual character closest to the real appearance, i.e., with the highest similarity. Here, the activity of the virtual character may be recognized based on schedule information. This is because, in an activity or place where family members participate, intuitive recognition is possible only when a virtual character close to the real appearance is displayed.

The second virtual character change unit 800 may predict the aging value of the virtual character over time in the virtual reality world using a future face prediction modeling algorithm and may apply the predicted aging value to the virtual character to change and display the virtual character. Of course, it is possible to induce an update of the virtual character by notifying of a change of the virtual character whenever a predetermined period passes, thereby enabling a change of the character reflecting the time. Further, the member himself may change and update his virtual character. In particular, when his face or appearance is changed by, e.g., plastic surgery, an update according to the face change may be made.

Meanwhile, in the virtual reality world according to this embodiment, each member may virtually do all human activities, such as virtual performances, concerts, sports, business, love, etc., identical to those in the real world, using his virtual character.

Further, in this embodiment, the virtual character need not necessarily be a human being, but for a non-human target, e.g., an animal, a product (good), or building, a virtual character may be created and protected for design rights in the virtual reality world.

## Claims

1. An identity authentication management system in a virtual reality world, comprising:
a virtual identity registration application unit receiving at least one protection target information of personal identity information and object information and photo image information for a protection target and applying for registration of identity information for the protection target to be used in the virtual reality world;
a virtual identity character generation unit setting a similarity range for the photo image information and generating at least one virtual character according to the set similarity range; and
a virtual identity authentication registration unit performing identity authentication based on the personal identity information and a similarity check between the virtual character and another virtual character included in a pre-registered virtual ID, if the identity authentication and the similarity check are normally processed, providing a public key and a private key for disclosing and protecting the personal identity information using a blockchain, registering the virtual identity information, along with the virtual character, in a database, and issuing a virtual ID.

2. The identity authentication management system in the virtual reality world of claim 1, further comprising a virtual identity reservation registration unit that, when applying for registration of the virtual identity information through the virtual identity registration application unit without the virtual character, preempts a date of the issuance of the virtual ID on a date of application of the registration, when generating the virtual character and performing the similarity check later, interworks with the virtual identity authentication registration unit to select a virtual character registered before the date of application of the registration, as a target for similarity comparison and perform the similarity check.

3. The identity authentication management system in the virtual reality world of claim 1, wherein the virtual identity character generation unit includes:
a similarity range setting unit setting a similarity range for the photo image information;
a 3D character modeling unit 3D-modeling the photo image information according to the similarity range set through the similarity range setting unit to generate draft data of the virtual character; and
a 3D character editing unit performing 3D design editing on the draft data to generate the virtual character.

4. The identity authentication management system in the virtual reality world of claim 1, wherein the virtual identity authentication registration unit includes:
an identity authentication performing unit performing identity authentication based on the personal identity information;
a virtual character similarity check performing unit performing the similarity check between the virtual character and the other virtual character included in the pre-registered virtual ID;
an encryption code generation unit, if the identity authentication and the similarity check are normally processed, providing an encryption code including a public key for mutually identifying information disclosed in the virtual reality world among the personal identity information and a private key for protecting information not disclosed in the virtual reality world among the personal identity information;
a virtual identity information registration unit registering the virtual identity information including the personal identity information, the virtual character, and the encryption code in the database; and
a virtual ID issuing unit issuing the virtual ID to a person whose virtual identity information has been registered.

5. The identity authentication management system in the virtual reality world of claim 4, further comprising a personal identity information display identification unit displaying the virtual ID, along with the virtual character, in the virtual reality world, receiving the public key displayed on the virtual ID, displaying only disclosed information among the personal identity information included in the virtual ID to be identified through another virtual character, receiving the private key, and displaying non-disclosed information among the personal identity information.

6. The identity authentication management system in the virtual reality world of claim 1, further comprising a virtual anonymous identity creation unit generating a virtual anonymous character having a similarity range value not more than a preset similarity range value through the virtual identity character generation unit according to a request of a member and, if the identity authentication based on the personal identity information is normally processed, providing a public key for mutually identifying only some of the information disclosed in the virtual reality world together with the virtual anonymous character or registering virtual anonymous identity information with the database to issue a virtual anonymous ID without providing the public key.

7. The identity authentication management system in the virtual reality world of claim 1, further comprising a first virtual character change unit changing to and displaying a virtual character having a preset similarity range according to a preset category for an activity of the virtual character and a place where the virtual character is located.

8. The identity authentication management system in the virtual reality world of claim 1, further comprising a second virtual character change unit predicting an aging value of the virtual character over time in the virtual reality world and applying the predicted aging value to the virtual character to change and display the virtual character.
